# EUROPEAN PATENT APPLICATION

(11) **EP 3 627 304 A1**
(43) Date of publication of application: **25.03.2020**
(21) Application number: 18212821.5
(22) Date of filing: 15.12.2018
(51) Int. Cl.: G06F 3/0481, G06N 3/00, G10L 15/22, H04L 12/58, G06F 16/332

(54) **INTERACTIVE RESPONDING METHOD AND COMPUTER SYSTEM USING THE SAME**

(30) Priority: 20.09.2018 US 201816137529
(71) Applicant: XRSpace CO., LTD., Taoyuan City 330 (TW)
(72) Inventor: Chou, Peter, 100 Taipei City (TW); Chu, Feng-Seng, 235 New Taipei City (TW); Lee, Cheng-Wei, 205 Keelung City (TW)
(74) Representative: Straus, Alexander

(57) **Abstract**

An interactive responding method (20) comprises receiving an input data from a user (204); generating an output data according to the input data retrieving a plurality of attributes from the output data (206); retrieving a plurality of attributes from the output data (208); determining a plurality of interactions corresponding to the plurality of attributes of the output data (210); and displaying the plurality of interactions via a non-player character (212); wherein the input data and the output data are related to a text.

## Description

### Field of the Invention

The present disclosure relates to an interactive responding method and a computer system using the same, and more particularly, to an interactive responding method and a computer system capable of enabling a Chatbot to respond more interactively.

### Background of the Invention

With the advancement and development of technology, the demand of interactions between a computer system and a user is increased. Human-computer interaction technology, e.g. somatosensory games, virtual reality (VR) environment, augmented reality (AR) environment, mixed reality (MR) environment, extended reality (XR) environment, online customer service and Chatbot, becomes popular because of its convenience and efficiency. Such human-computer interaction technology may be utilized in gaming or websites, and Chatbot is one of common human-computer interaction technologies, which conducts a conversation via auditory or texts with the user through a computer program or an artificial intelligence. For example, Chatbot replies simple text messages or text questions to the user. In this way, Chatbot can only reply simple questions or machine responses in texts, which limits the interactions between Chatbot and the user. Therefore, an improvement is necessary to the prior art.

### Summary of the Invention

Therefore, the present disclosure provides an interactive responding method and a computer system to improve interactions between the Chatbot and the user and provide a better user experience.

This is achieved by an interactive responding method according to the independent claim 1 or by a computer system according to the independent claim 7 here below. The dependent claims pertain to corresponding further developments and improvements.

As will be seen more clearly from the detailed description following below, the claimed interactive responding method comprises receiving an input data from a user; generating an output data according to the input data; retrieving a plurality of attributes from the output data; determining a plurality of interactions corresponding to the plurality of attributes of the output data; and displaying the plurality of interactions via a non-player character; wherein the input data and the output data are related to a text.

In another aspect, the claimed computer system comprises a processing device; and a memory device coupled to the processing device, for storing a program code, wherein the program code instructs the processing device to perform an interactive responding method, and the interactive responding method comprises receiving an input data from a user; generating an output data according to the input data; retrieving a plurality of attributes from the output data; determining a plurality of interactions corresponding to the plurality of attributes of the output data; and displaying the plurality of interactions via a non-player character; wherein the input data and the output data are related to a text.

### Brief Description of the Drawings

FIG. 1 is a schematic diagram of a computer system according to an embodiment of the present disclosure.
FIG. 2 is a schematic diagram of an interactive responding process according to an embodiment of the present disclosure.
FIG. 3 is a schematic diagram of a computer system according to another example of the present disclosure.

### Detailed Description

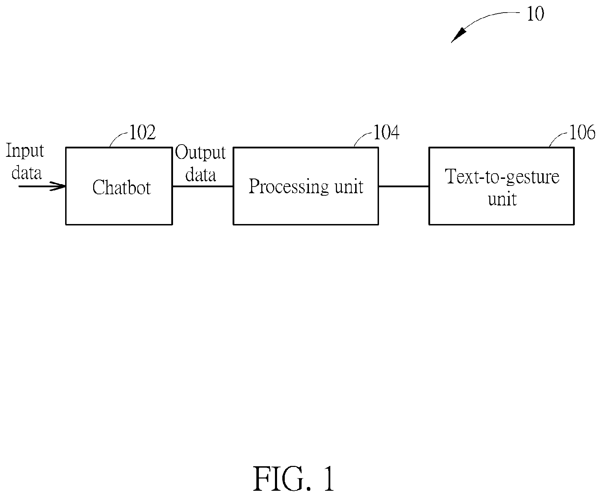

Please refer to FIG. 1, which is a schematic diagram of a computer system 10 according to an embodiment of the present disclosure. The computer system 10 includes a Chatbot 102, a processing unit 104 and a text-to-gesture unit 106. The Chatbot 102 is configured to receive an input data from a user. For example, the user may input text messages into the Chatbot, a translator may be utilized for translating a speech made by the user into the texts. In addition, Chatbot 102 may generate a text-based output data according to the input data. The processing unit 104 is configured to retrieve a plurality of attributes from the input data. In an example, the processing unit 104 may retrieve an emotion, intention, a semantic role or a keyword of the output data in real-time. The text-to-gesture unit 106 is configured to determine a plurality of interactions corresponding to the attributes of the text-based output data. The interactions are at least one of an action, a facial expression, a gaze, a text, a speech, a gesture, an emotion or a movement. In addition, when the interactions corresponding to the output data are determined, the interactions are displayed via a non-player character (NPC). Therefore, the computer system 10 of the present disclosure may interact with the user by incorporating the Chatbot and the NPC so as to improve a better user experience.

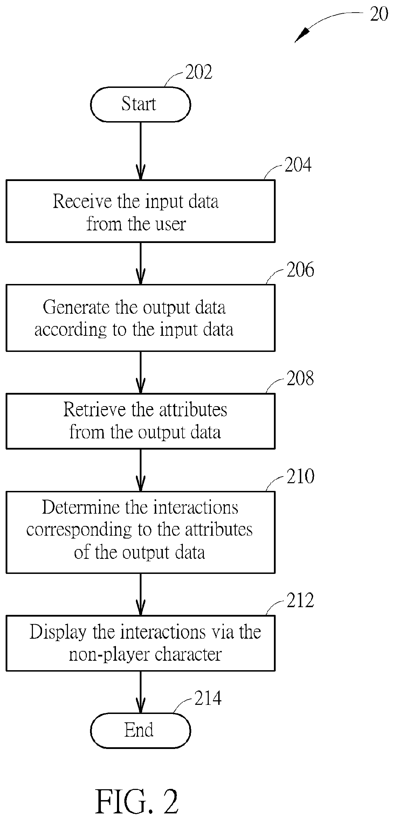

In detail, please refer to FIG. 2, which is a schematic diagram of an interactive responding process 20 according to an embodiment of the present disclosure. The interactive responding process 20 includes the following steps:
Step 202: Start.
Step 204: Receive the input data from the user.
Step 206: Generate the output data according to the input data.
Step 208: Retrieve the attributes from the output data.
Step 210: Determine the interactions corresponding to the attributes of the output data.
Step 212: Display the interactions via the non-player character.
Step 214: End.

In step 204, the Chatbot 102 receives the input data from the user. The input data may be texts or texts translated from an audio or a speech generated by the user. In an embodiment, when the user is in a gaming environment, the user may input text messages to the Chatbot 102 and ask simple questions. Alternatively, when the user generates a speech, the speech is translated to the text by a program, and utilized as the input data for the Chatbot 102.

After receiving the input data (i.e. the texts), in step 206, the Chatbot 102 may instantly generate the output data corresponding to the input data. In an example, when the input data inputted by the user is "How are you", the Chatbot 102 may instantly generate the output data "I'm fine", which may be utilized as a base for retrieving the attributes in step 208 accordingly. In step 208, the output data is retrieved to determine the attributes, such as, an emotion, an intention, a semantic role or a keyword of the output data. In an embodiment, the output data is retrieved by the processing unit 104 of the computer system 10 or a server. As such, the processing unit 104 may retrieve the emotions, intentions, semantic roles or keywords from the output data simultaneously. In an example, the processing unit 104 determines that the output data generated by the Chatbot 102 contains a sad emotion in the output data and retrieves the sad emotion consequently. Similarly, the processing unit 104 determines that the user is happy when the user sends a happy emoji. Notably, multiple emotions, intentions, semantic roles or keywords may be retrieved from the output data, and not limited thereto. Moreover, the processing unit 104 may also be implemented in the Chatbot, the computer system 10 or the server, so as to process and retrieve the text messages from the user in real-time.

In step 210, the interactions corresponding to the attributes of the output data is determined. In an embodiment, the interactions corresponding to the attributes of the output data is determined by the text-to-gesture unit 106. The interactions are at least one of an action, a facial expression, a gaze, a text, a speech, a gesture, an emotion or a movement and displayed via the virtual avatar. The interactions may be determined by a machine learning process or a rule based process adopted by the text-to-gesture unit 106, which collects a plurality of videos having a plurality of body languages and a plurality of transcripts for the machine learning process or the rule based process. More specifically, the videos may be utilized for training the text-to-gesture unit 106 to determine and store the interactions corresponding to the transcripts or texts. Aside from that, the text-to-gesture unit 106 may learn the corresponding attributes from body languages or transcripts presented in the video. For example, when a man in the video waves his hand and laughs loudly, the text-to-gesture unit 106 may learn that a happiness emotion corresponds to a laugh face. Alternatively, when a man says "I hate you" with a hatred facial expression, the text-to-gesture unit 106 may learn that 'I hate you' corresponds to a dislike emotion. Therefore, the text-to-gesture unit 106 may automatically identify the corresponding attributes according to the output data, when the user input related words or phrases.

After the interactions corresponding to attributes are retrieved from the output data, in step 212, the interactions are displayed via the NPC. In an embodiment, the NPC may be a virtual avatar in a virtual reality environment, an argument reality environment, a mixed reality environment or an extended reality environment, which may display the interactions determined in step 208. That is, when the attributes is a sad emotion, the NPC may display the sad emotion through the facial expression of the virtual avatar. Under the situation, the Chatbot 102 may interact with the user via the virtual avatar according to the interactions determined by the text-to-gesture unit 106, rather than answering machine replies to the user with texts via the Chatbot 102.

In an embodiment, the computer system 10 may be utilized as a spokesman or an agent of a company. Since not every company may adopt or afford an artificially intelligent (AI) system to answer customers' questions, the computer system 10 of the present disclosure may perceive the emotion, the intention, the semantic role or the keyword from the questions asked by the customer, as such, the computer system 10 may understand customer's interest and behavior by retrieving the attributes by the text inputted by the customer. In this way, not only the response is delivered by the Chatbot 102, but also the determined interactions are displayed via the NPC to interact with the customer. Therefore, the computer system 10 of the present disclosure may be the spokesman or the agent for the company, which helps to improve images of the company.

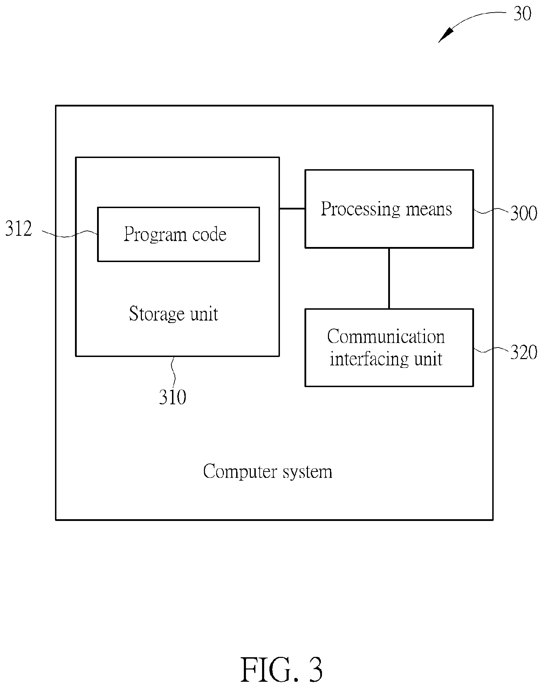

Please refer to FIG. 3, which is a schematic diagram of a computer system 30 according to an example of the present disclosure. The computer system 30 may be utilized for realizing the interactive responding process 20 stated above, but is not limited herein. The computer system 30 may include a processing means 300 such as a microprocessor or Application Specific Integrated Circuit (ASIC), a storage unit 310 and a communication interfacing unit 320. The storage unit 310 may be any data storage device that can store a program code 312, accessed and executed by the processing means 300. Examples of the storage unit 310 include but are not limited to a subscriber identity module (SIM), read-only memory (ROM), flash memory, random-access memory (RAM), CD-ROM/DVD-ROM, magnetic tape, hard disk and optical data storage device.

Notably, the embodiments stated above illustrate the concept of the present disclosure, those skilled in the art may make proper modifications accordingly, and not limited thereto. For example, the determination to retrieve the attributes from the text-based output data is not limited to the machine learning method, and the machine learning method is not limited to a collection of videos, which may be realized by other methods and all belongs to the scope of the present disclosure.

In summary, the present disclosure provides an interactive responding method and computer system to improve interactions between the Chatbot and the user, such that the NPC may interact with the user with involvements of speeches, body gestures and emotions and provide a better user experience.

## Claims

1. An interactive responding method (20), **characterized by** comprising:
receiving an input data from a user (204);
generating an output data according to the input data (206);
retrieving a plurality of attributes from the output data (208);
determining a plurality of interactions corresponding to the plurality of attributes of the output data (210); and
displaying the plurality of interactions via a non-player character (212);
wherein the input data and the output data are related to a text.

2. The interactive responding method (20) of claim 1, **characterized in that** the plurality of attributes are at least one of an emotion, an intention, a semantic role and a keyword of the output data.

3. The interactive responding method (20) of claim 1, **characterized in that** the non-player character is a virtual avatar in a virtual reality environment, an argument reality environment, a mixed reality environment or an extended reality environment.

4. The interactive responding method (20) of claim 3, **characterized in that** the plurality of interactions are at least one of an action, a facial expression, a gaze, a text, a speech, a gesture, an emotion or a movement and displayed via the virtual avatar.

5. The interactive responding method (20) of claim 1, **characterized in that** the plurality of interactions are determined by a machine learning process or a rule based process.

6. The interactive responding method (20) of claim 5, **characterized in that** a plurality of videos having a plurality of body languages and a plurality of transcripts are collected for the machine learning process.

7. A computer system (30), **characterized by** comprising:
a processing device (300); and
a memory device (310) coupled to the processing device (300), for storing a program code, wherein the program code (312) instructs the processing device (300) to perform an interactive responding method (20), and the interactive responding method (20) comprises:
receiving an input data from a user (204);
generating an output data according to the input data (206);
retrieving a plurality of attributes from the output data (208);
determining a plurality of interactions corresponding to the plurality of attributes of the output data (210); and
displaying the plurality of interactions via a non-player character (212);
wherein the input data and the output data are related to a text.

8. The computer system (30) of claim 7, **characterized in that** the plurality of attributes are at least one of an emotion, an intention, a semantic role and a keyword of the output data.

9. The computer system (30) of claim 7, **characterized in that** the non-player character is a virtual avatar in a virtual reality environment, an argument reality environment, a mixed reality environment or an extended reality environment.

10. The computer system (30) of claim 9, **characterized in that** the plurality of interactions are at least one of an action, a facial expression, a gaze, a text, a speech, a gesture, an emotion or a movement and displayed via the virtual avatar.

11. The computer system (30) of claim 7, **characterized in that** the plurality of interactions are determined by a machine learning process or a rule based process.

12. The computer system (30) of claim 11, **characterized in that** a plurality of videos having a plurality of body languages and a plurality of transcripts are collected for the machine learning process.
